# FASCICULE DE BREVET EUROPEEN

(11) **EP 1 245 929 B1**
(45) Date de publication et mention de la délivrance du brevet: **25.11.2009**
(21) Numéro de dépôt: 02290524.4
(22) Date de dépôt: 04.03.2002
(51) Int. Cl.: G01C 23/00, G05D 1/06, G08G 5/04

(54) **Procédé et dispositif d'assistance au pilotage d'un aéronef, notamment d'un avion de transport**
Verfahren und Vorrichtung zur Unterstützung bei der Steuerung eines Flugzeuges, insbesondere eines Transportflugzeuges
Method and device for assisting in steering an aircraft, especially for a transport aircraft

(30) Priorité: 27.03.2001 FR 0104083
(43) Date de publication de la demande: 02.10.2002
(73) Titulaire: AIRBUS OPERATIONS, 31060 Toulouse (FR)
(72) Inventeur: Morizet, Benoit, 31400 Toulouse (FR); Vial, Jean-Sébastien, 31770 Colomiers (FR)
(74) Mandataire: Hauer, Bernard

(56) Documents cités:
- WO-A-01/20583
- FR-A- 2 689 231
- FR-A- 2 744 525
- US-A- 6 112 141

## Description

La présente invention concerne un procédé et un dispositif d'assistance au pilotage d'un aéronef, notamment d'un avion de transport.

Par le brevet FR-2 689 231, on connaît un procédé d'assistance au pilotage, selon lequel on présente sur au moins un écran de visualisation d'un aéronef, une présentation d'informations qui représente au moins un plan vertical le long d'un plan de vol dudit aéronef et qui comporte :
- un système d'axes, dont un axe d'ordonnée est gradué en altitude, et un axe d'abscisse est gradué en distance à partir de la position de l'aéronef ;
- un symbole particulier représentant l'aéronef, qui est disposé sur ledit axe d'ordonnée à une position représentative de l'altitude dudit aéronef ; et
- un tracé représentant une trajectoire de consigne que l'aéronef doit suivre dans ledit plan vertical.

Ledit tracé est formé d'une pluralité de segments rectilignes rejoignant des points de passage. De plus, auxdits points de passage sont prévus des symboles de contrainte d'altitude, qui indiquent une altitude maximale et/ou une altitude minimale que l'aéronef doit respecter lorsqu'il arrive auxdits points de passage.

Toutefois, ces symboles de contrainte d'altitude qui sont formés par de petits triangles ne présentent pas la réalité de façon significative et facilement lisible. De plus, une telle présentation peut être source d'erreurs. Par exemple, si une altitude de consigne varie fortement un peu en amont (ou en aval) d'un point de passage, un pilote de l'aéronef peut être induit en erreur en pensant que l'altitude de consigne qui est visualisée audit point de passage est également vérifiée en amont (ou en aval) de ce dernier.

En outre, par le brevet FR-2 744 525, on connaît un procédé d'assistance du même type que celui précité. Toutefois, selon ce procédé connu, l'axe d'abscisse n'est pas gradué en distance, mais en temps, et on fait défiler l'axe des temps de manière à maintenir à une position fixe sur l'écran de visualisation une abscisse représentant le temps à l'instant de l'affichage.

Le brevet US-A-6112141 décrit un procédé et un dispositif selon le préambule des revendications indépendantes.

La présente invention concerne un procédé d'assistance au pilotage d'un aéronef, permettant de remédier aux inconvénients précités.

A cet effet, ledit procédé selon lequel on présente sur au moins un écran de visualisation dudit aéronef, une première présentation d'informations qui représente au moins un plan vertical le long d'une trajectoire de vol théorique dudit aéronef et qui comporte :
- un système d'axes, dont un axe d'ordonnée est gradué en altitude, et un axe d'abscisse est gradué en distance à partir de la position de l'aéronef ;
- un symbole particulier représentant l'aéronef, qui est disposé sur ledit axe d'ordonnée à une position représentative de l'altitude dudit aéronef ; et
- un premier tracé représentant une trajectoire de vol théorique dudit aéronef dans ledit plan vertical,
est remarquable, selon l'invention, en ce que ladite première présentation d'informations comporte de plus :
- au moins un deuxième tracé correspondant à une altitude de sécurité ; et
- un troisième tracé correspondant à un contour du terrain dans ledit plan vertical.

Ainsi, grâce à l'invention, on fournit au pilote une présentation facilement compréhensible et lisible de la situation verticale (position et trajectoire) de l'aéronef, par rapport à des obstacles fictifs (altitude de sécurité) et réels (terrain), et ceci sur tout le vol (même si à un instant donné tout le trajet de vol restant à parcourir peut ne pas être visible sur l'écran, pour des raisons de place disponible sur ledit écran). On peut ainsi adapter la trajectoire de l'aéronef à ces différents obstacles, et ceci bien en amont d'une zone de problème potentiel. Ceci permet bien entendu d'augmenter la sécurité du vol.

De plus, grâce à l'invention, les informations importantes précitées (trajectoire de vol théorique, altitude de sécurité, contour du terrain) sont représentées par l'intermédiaire d'un même type de graphisme (à savoir un tracé), ce qui facilite leur lecture et simplifie le contrôle de la situation de l'aéronef.

On sait que différents types d'altitude de sécurité sont disponibles, en fonction des sources d'informations qui définissent ces altitudes, certaines sources, notamment celles dont l'analyse est limitée à des zones réduites, étant plus appropriées que d'autres.

De façon avantageuse, ladite première présentation d'informations comporte de plus un quatrième tracé correspondant à une coupe verticale d'une image météo issue d'un radar.

Dans le cadre de la présente invention, les différents tracés peuvent être considérés non seulement dans un plan vertical ("épaisseur" nulle), mais également dans une bande verticale d'épaisseur adaptée à la précision de navigation requise [par exemple RNP ("Required Navigation Performance")].

Selon l'invention, pour perfectionner la présentation de l'altitude de sécurité, les valeurs d'altitude de sécurité utilisées pour réaliser ledit deuxième tracé sont issues d'au moins deux sources d'informations différentes, et on utilise les valeurs de l'une ou de l'autre desdites sources d'informations, en fonction de la phase de vol de l'aéronef et de la trajectoire suivie.

De préférence :
- lorsque l'aéronef se trouve hors d'une route prédéfinie, on utilise pour toutes les phases de vol les valeurs d'altitude de sécurité issues d'une source d'informations définissant des altitudes de sécurité sectorielle sur des secteurs quadrangulaires, de préférence du type MORA ("Minimum Off Route Altitude"), excepté pour la phase d'approche, pour laquelle on utilise les valeurs d'altitude de sécurité issues d'une source d'informations définissant des altitudes de sécurité sectorielle sur des secteurs circulaires, de préférence du type MSA ("Minimum Safe Altitude") ; et/ou
- lorsque l'aéronef se trouve sur une route prédéfinie, on utilise les valeurs d'altitude de sécurité issues d'une source d'informations définissant les altitudes de sécurité de route.

Par ailleurs, avantageusement, si ledit deuxième tracé sort de ladite première présentation d'informations en raison de l'échelle choisie pour l'axe des ordonnées, on indique sur ladite première présentation d'informations la valeur numérique de l'altitude de sécurité.

En outre, pour perfectionner le contrôle précité de la situation de l'aéronef par rapport aux différents obstacles (fictif et réel), de façon avantageuse :
- un premier symbole d'alerte est présenté sur ladite première présentation d'informations lorsque la trajectoire théorique de l'aéronef, par rapport audit deuxième tracé (altitude de sécurité), n'est pas conforme à des prescriptions prédéfinies, par exemple lorsqu'elle est trop proche d'une altitude de sécurité ou dépasse (vers le bas) une telle altitude de sécurité ; et/ou
- un second symbole d'alerte est présenté sur ladite première présentation d'informations lorsque la trajectoire théorique de l'aéronef, par rapport audit troisième tracé (contour du terrain), n'est pas conforme à des prescriptions prédéfinies, en particulier lorsqu'elle est trop proche du terrain.

Dans le cadre de la présente invention, on peut représenter le contour du terrain par différents types de tracés tels que des segments inclinés ou des courbes lissées par exemple. Toutefois, de préférence, on représente le terrain, sur ladite première présentation d'informations, par une suite de rectangles adjacents permettant de former ledit troisième tracé.

Dans un mode de réalisation préféré, ledit écran de visualisation, de préférence un écran de navigation ND ("Navigation Display"), comporte au moins deux fenêtres de visualisation, dont une première fenêtre comprend ladite première présentation d'informations et une seconde fenêtre comprend une seconde présentation d'informations qui comporte, entre autres, un tracé représentant une trajectoire de vol théorique de l'aéronef dans un plan horizontal.

Avantageusement, l'échelle de l'axe d'abscisse et, pour au moins certaines valeurs d'échelle, l'échelle de l'axe d'ordonnée de ladite première présentation d'informations, dépendent de l'échelle de ladite seconde présentation d'informations. De préférence, ces échelles d'axe sont proportionnelles à l'échelle de ladite seconde présentation d'informations.

La présente invention concerne également un dispositif d'assistance au pilotage d'un aéronef, du type comportant au moins :
- une pluralité de sources d'informations ;
- une unité d'acquisition et de traitement d'informations qui est reliée auxdites sources d'informations ; et
- des moyens d'affichage reliés à ladite unité d'acquisition et de traitement d'informations et présentant, sur au moins un écran de visualisation, une première présentation d'informations qui représente au moins un plan vertical le long d'une trajectoire de vol théorique dudit aéronef et qui comporte :
   . un système d'axes, dont un axe d'ordonnée est gradué en altitude, et un axe d'abscisse est gradué en distance à partir de la position de l'aéronef ;
   . un symbole particulier représentant l'aéronef, qui est disposé sur ledit axe d'ordonnée à une position représentative de l'altitude dudit aéronef ; et
   . un premier tracé représentant une trajectoire de vol théorique dudit aéronef dans ledit plan vertical,

Selon l'invention, ledit dispositif d'assistance est remarquable en ce que lesdits moyens d'affichage sont formés de manière à présenter, de plus, sur ledit écran de visualisation, au niveau de ladite première présentation d'informations :
- au moins un deuxième tracé correspondant à une altitude de sécurité ; et
- un troisième tracé correspondant à un contour du terrain dans ledit plan vertical.

De façon avantageuse, ledit dispositif d'assistance comporte, de plus, des moyens susceptibles d'être actionnés par un opérateur et permettant à ce dernier de modifier des informations prises en compte par l'unité d'acquisition et de traitement d'informations.

Les figures du dessin annexé feront bien comprendre comment l'invention peut être réalisée. Sur ces figures, des références identiques désignent des éléments semblables.

La figure 1 est le schéma synoptique d'un dispositif d'assistance conforme à l'invention.

La figure 2 montre schématiquement un écran de visualisation d'un dispositif d'assistance conforme à l'invention.

La figure 3 montre une présentation d'informations permettant de bien comprendre la mise en oeuvre du procédé conforme à l'invention.

La figure 4 montre schématiquement la fenêtre inférieure de l'écran de visualisation de la figure 2, dans une situation (position et trajectoire) différente de l'aéronef.

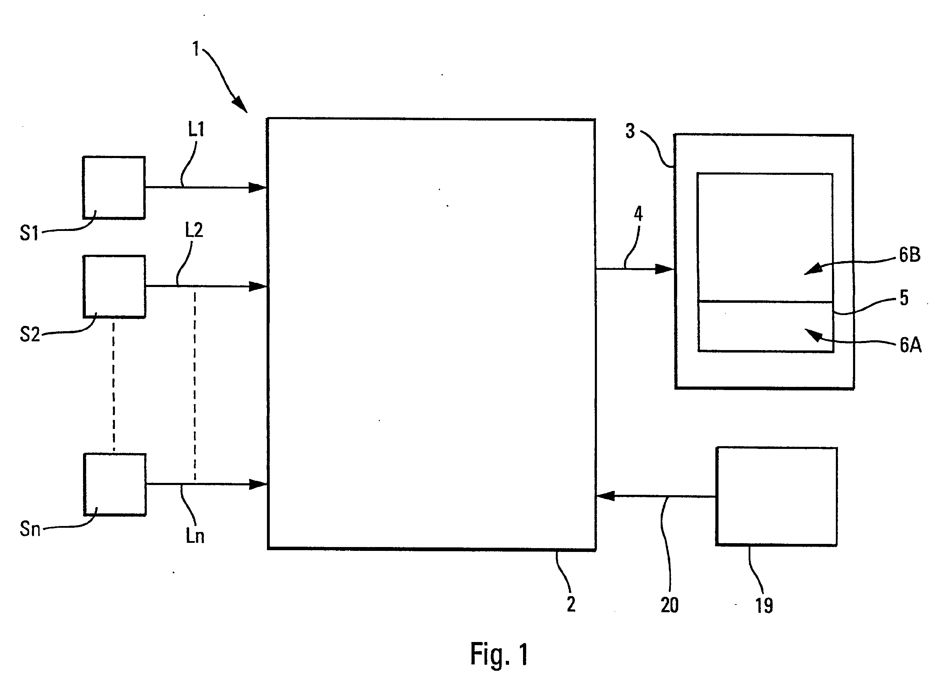

Le dispositif 1 conforme à l'invention et représenté schématiquement sur la figure 1 est destiné à assister des opérateurs (pilote, copilote, ...) d'un aéronef lors du pilotage dudit aéronef, par exemple un avion de transport civil, non représenté.

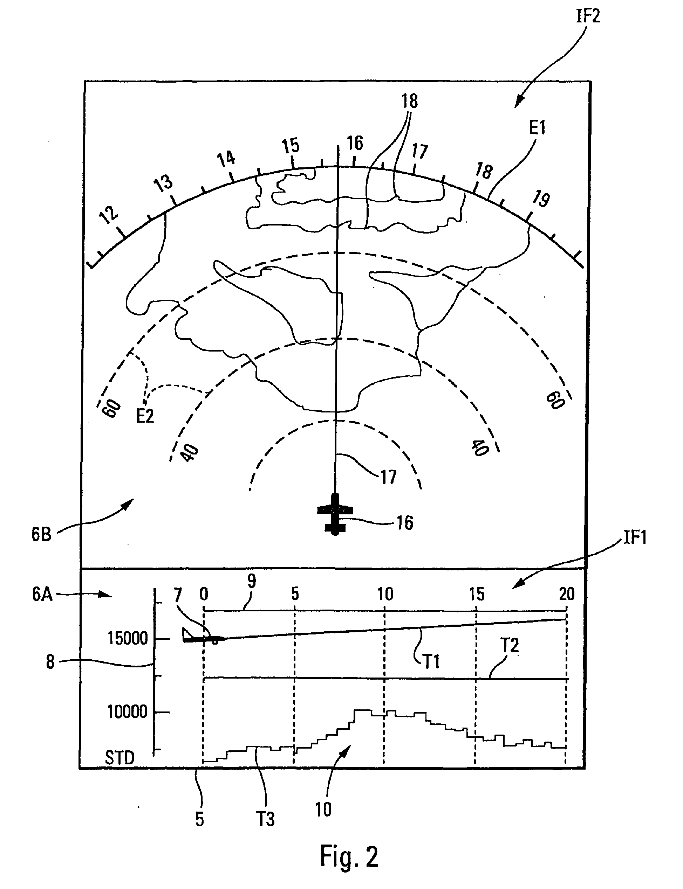

Ledit dispositif 1 qui est embarqué sur l'aéronef, est du type connu comportant :
- une unité (centrale) d'acquisition et de traitement d'informations 2, par exemple un système de gestion de vol du type FMS ("Flight Management System") ;
- une pluralité de sources d'informations S1 à Sn connues, telles que des instruments de navigation et des capteurs donnant des informations sur l'état et la position de l'aéronef par exemple, qui sont reliées par l'intermédiaire de liaisons L1 à Ln à ladite unité 2 ; et
- des moyens d'affichage 3 qui sont reliés, par l'intermédiaire d'une liaison 4, à l'unité 2 et qui comportent un écran de visualisation 5. Ledit écran 5 comprend, selon l'invention, deux fenêtres de visualisation 6A et 6B superposées, comme montré sur la figure 2.

Lesdits moyens d'affichage 3 présentent de façon usuelle, sur la fenêtre 6A de l'écran 5, comme représenté sur la figure 2, une première présentation d'informations IF1 qui représente au moins un plan vertical le long d'une trajectoire de vol (théorique) dudit aéronef représenté par un symbole 7 particulier et qui comporte :
- un système d'axes, dont un axe d'ordonnée 8 est gradué en altitude, exprimée de préférence en pieds (un pied valant environ 0,3 mètre), et un axe d'abscisse 9 qui est gradué en distance à partir de la position de l'aéronef 7, exprimée de préférence en mille nautique NM (un mille nautique valant environ 1852 mètres) ;
- ledit symbole particulier 7 représentant l'aéronef, qui est disposé sur ledit axe d'ordonnée 8 à une position représentative de l'altitude dudit aéronef ; et
- un tracé T1 représentant une trajectoire de vol théorique dudit aéronef dans ledit plan vertical, comme précisé ci-dessous.

Selon l'invention, lesdits moyens d'affichage 3 sont formés de manière à présenter le cas échéant, de plus, sur ladite fenêtre 6A dudit écran de visualisation 5, au niveau de ladite première présentation d'informations IF1
- au moins un tracé T2, de préférence un trait continu, par exemple en magenta, correspondant à une altitude de sécurité ; et
- un tracé T3 correspondant à un contour du terrain 10 dans ledit plan vertical.

Lesdits moyens d'affichage 3 peuvent également présenter un tracé non représenté correspondant à une coupe verticale d'une image météo issue d'un radar.

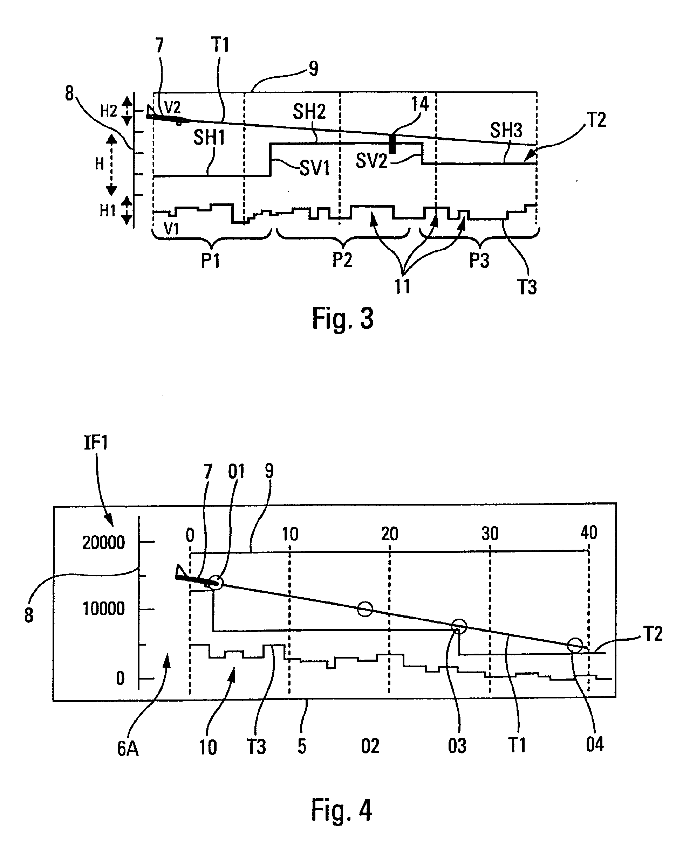

De plus, selon l'invention :
- le symbole 7 est situé à l'altitude barométrique qui est utilisée par l'équipage et qui, de façon usuelle, est indiquée sur l'écran primaire de pilotage PFD ("Primary Flight Display"), non représenté et relié au calculateur 2 par exemple. Ce symbole 7 est incliné selon l'angle de vol FPA ("Flight Path Angle"). On prévoit de plus une indication QNH (correspondant à la pression atmosphérique au-dessus du niveau de l'eau) ou une indication STD (correspondant à la mesure d'altitude standard), en fonction de la configuration barométrique utilisée à cet effet, à savoir l'indication STD dans l'exemple de la figure 2 ;
- le tracé T1 est formé de préférence par un tracé en vert, qui peut être continu ou en traits interrompus (c'est-à-dire avec tirets), selon le mode de navigation utilisé, comme on le verra plus en détail ci-dessous. Deux tracés différents (continu et en traits interrompus) peuvent également être présentés simultanément. Un tracé en traits interrompus correspond à la trajectoire théorique de l'aéronef (si elle est disponible), tandis que le tracé T1 en trait continu (représenté sur la figure 2 par exemple) correspond à la trajectoire réelle suivie par l'aéronef s'il garde les caractéristiques de vol (pente, ...) telles qu'elles existent à l'instant présent, selon l'angle de vol FPA ;
- la fenêtre 6A est divisée en trois bandes horizontales représentées schématiquement sur la figure 3, à savoir :
   . une marge inférieure H1 ;
   . une marge supérieure H2 ; et
   . une zone d'évolution H du symbole 7 de l'aéronef ; et
- le terrain 10 est formé par une pluralité de rectangles 11 représentés en particulier sur la figure 3, l'abscisse de chacun desdits rectangles 11 étant égale à la distance horizontale le long de la trajectoire de vol de l'aéronef. Ledit terrain 10 présente une couleur (par exemple marron) qui est différente de la couleur (par exemple noir ou gris) du fond de la zone H, ce qui permet de mettre en évidence le tracé T3 de contour du terrain.

La figure 2 illustre une situation de montée de l'aéronef et les figures 3 et 4, une situation de descente [avec la visualisation (par des cercles) de points de passage O1, O2, O3, O4 du plan de vol de l'aéronef sur la figure 4].

On notera que, dans le cadre de la présente invention, l'affichage dans le plan vertical peut également correspondre à la trajectoire prévue selon le plan de vol (possibilité de tourner dans le plan horizontal aux points de passage) et pas uniquement au tracé droit devant l'aéronef à un instant donné. Les altitudes de sécurité et le contour du terrain affichés correspondent donc à la trajectoire que va suivre l'aéronef si le plan de vol n'est pas modifié.

Ainsi, grâce à l'invention, on fournit au pilote une présentation facilement compréhensible et lisible de la situation (position, trajectoire) (plan de vol vertical) de l'aéronef dans un plan vertical, par rapport à des obstacles fictifs (altitude de sécurité T2) et réels (terrain 10), et ceci sur tout le vol (même si à un instant donné, le trajet de vol restant à parcourir n'est pas forcément visible en entier sur l'écran 5, pour des raisons de place disponible sur ledit écran 5). Le pilote peut ainsi adapter la trajectoire de l'aéronef à ces obstacles, bien en amont d'une possible zone de problème. Ceci permet d'augmenter la sécurité du vol.

De plus, grâce à l'invention, les informations importantes précitées (trajectoire de vol théorique T1, altitude de sécurité T2, contour du terrain T3) sont représentées par l'intermédiaire d'un même type de graphisme (à savoir un tracé), ce qui facilite leur lecture et simplifie le contrôle de la situation de l'aéronef.

Dans le cadre de la présente invention, la trajectoire T1 peut correspondre :
- à une trajectoire de consigne avec des points de passage ; et/ou
- à une trajectoire inclinée selon l'angle de vol FPA. De plus, dans ce cas, si une altitude de consigne est indiquée dans le pilote automatique, la trajectoire arrête son inclinaison lorsqu'elle atteint cette altitude de consigne et reste ensuite horizontale.

Par ailleurs, pour alerter l'opérateur lorsque la trajectoire T1 de l'aéronef s'approche trop d'un des tracés T2 et T3, les moyens d'affichage 3 présentent sur la fenêtre 6A de l'écran :
- un symbole d'alerte non représenté, par exemple un trait vertical rouge, qui indique que la position de la trajectoire T1 de l'aéronef, par rapport à celle du tracé T3, n'est pas conforme à des prescriptions prédéfinies, c'est-à-dire la trajectoire T1 atteint au point où est situé ce symbole d'alerte une hauteur minimale admissible au-dessus du terrain 10 ; et
- un symbole d'alerte 14, par exemple un trait vertical rouge, représenté schématiquement sur la figure 3, qui indique que la position de la trajectoire T1 (non représentée sur la figure 3) de l'aéronef, par rapport à celle du tracé T3, n'est pas conforme à des prescriptions prédéfinies.

Dans un mode de réalisation préféré, le symbole d'alerte 14 est présenté si :
- la position prédite --compte tenu des modes engagés-- est sous l'altitude de sécurité (altitude sélectée inférieure à l'altitude de sécurité interceptée si le pilote automatique est engagé) ; ou si
- l'altitude de l'aéronef est inférieure à celle de l'altitude de sécurité courante.

Dans le cas de la position prédite, on limitera de préférence la prédiction à une minute de vol.

Cette présentation du symbole d'alerte 14 est inhibée :
- pendant la phase initiale de décollage. La fonction devient active au-dessus de la première altitude de sécurité franchie ; et
- en phase d'approche, une fois l'altitude de sécurité franchie (vers le bas). On détermine si l'on est en phase d'approche, en tenant compte des modes de pilotage engagés.

Par ailleurs, selon l'invention, les valeurs d'altitude de sécurité utilisées pour réaliser ledit deuxième tracé T2 sont issues d'au moins deux sources d'informations différentes S1 à Sp par exemple (p étant inférieur à n), et on utilise les valeurs de l'une ou de l'autre desdites sources d'informations S1 à Sp, en fonction de la phase de vol de l'aéronef, comme illustré sur la figure 3. Sur cette figure 3, pendant des phases de vol P1, P2 et P3, les altitudes de sécurité utilisées prennent respectivement des valeurs A1, A2 et A3 illustrées par des segments horizontaux SH1, SH2, SH3 situés auxdites valeurs A1, A2 et A3 non représentées.

Ainsi, à titre d'illustration, la valeur A1 peut être issue d'une première source d'informations, la valeur A2 d'une deuxième source d'informations, et la valeur A3 d'une troisième source d'informations ou de ladite première source d'informations.

Le tracé T2 comporte, en plus desdits segments horizontaux SH1 à SH3, des segments verticaux SV1 et SV2 reliant ensemble ces segments horizontaux SH1 à SH3.

Si un tracé T2 d'une altitude de sécurité n'est pas visible dans le champ de visualisation H, parce qu'il se trouve à une valeur qui n'est pas indiquée sur l'axe d'ordonnée 8 qui est affiché (il est sorti par le haut ou par le bas du champ de visualisation), on affiche sa valeur numérique :
- soit au niveau de la marge H1, si la valeur de l'altitude de sécurité est inférieure aux valeurs affichées de l'axe 8, comme représenté pour une valeur V1 sur la figure 3 ;
- soit au niveau de la marge H2, si la valeur est supérieure à celles affichées de l'axe 8, comme illustré pour une valeur V2.

Dans le cadre de la présente invention, on peut prendre en compte deux types connus d'altitudes de sécurité, à savoir :
- des altitudes de sécurité sectorielle, qui sont valables sur une zone de terrain ; et
- des altitudes de sécurité de route, qui sont liées à une route (de vol) particulière.

Les altitudes de sécurité sectorielles sont applicables lorsque l'on n'est pas sur une route prédéfinie, connue et suivie par le calculateur de gestion de vol FMS. Elles sont définies sur des secteurs :
- circulaires pour les altitudes MSA ("Minimum Safe Altitude"), situés à une distance inférieure à 25 NM (mille nautique) d'un moyen radio de référence ; ou
- quadrangulaires (40 NM x 40 NM) pour les altitudes MORA ("Minimum Off Route Altitude").

Les altitudes MORA sont appliquées par défaut. Elles sont remplacées par l'altitude MSA à l'approche de la destination.

En outre, les altitudes de sécurité sur une route sont des minima opérationnels à respecter sur des segments et en des points particuliers d'une trajectoire publiée. Selon l'invention, on utilisera :
- soit, s'il est disponible, un tableau de données correspondant à la trajectoire publiée ;
- soit les données correspondant aux secteurs survolés.

Par ailleurs, selon l'invention, la fenêtre 6A précitée peut être une zone de visualisation (complète ou partielle) de différents types d'écran de visualisation, notamment d'un écran qui est prévu de façon spécifique pour la mise en oeuvre de la présente invention ou d'un écran primaire de pilotage PFD ("Primary Flight Display") connu.

Toutefois, dans un mode de réalisation préféré, l'écran 5 est un écran de navigation ND ("Navigation Display") qui comporte les deux fenêtres 6A et 6B, la fenêtre 6A comprenant la présentation d'informations IF1 précitée conforme à l'invention et la fenêtre 6B comprenant une présentation d'informations IF2 représentée schématiquement sur la figure 2.

Cette présentation d'informations IF2 qui correspond à une présentation usuelle sur un écran ND illustre la situation de l'aéronef (plan de vol latéral) dans un plan horizontal et comporte :
- un symbole 16, illustrant la position de l'aéronef ;
- un tracé 17 montrant la trajectoire de vol théorique de l'aéronef dans le plan horizontal, comme précisé ci-dessous en fonction des modes de navigation et de guidage ;
- une graduation usuelle E1 en écarts angulaires ;
- une graduation usuelle E2 en distances ; et
- des tracés 18 illustrant schématiquement une image radar ou une image du terrain.

La présentation d'informations IF2 peut être représentée selon différents modes communément connus sous les appellations ARC, ROSE, PLAN. L'affichage de la présentation d'informations IF1 est réalisé en cohérence avec ces différents modes : distance affichée devant l'aéronef (donc échelle de l'axe d'abscisse de la présentation IF1). De plus, en mode PLAN, on réalise un défilement simultané du plan de vol sur les présentations IF1 et IF2.

Par ailleurs, le dispositif 1 conforme à l'invention comporte, de plus, des moyens 19 (par exemple un écran et/ou un ensemble d'éléments de commande tels que des boutons rotatifs ou des boutons poussoirs) qui sont reliés par une liaison 20 à l'unité 2 et qui sont susceptibles d'être actionnés par un opérateur et permettent à ce dernier de modifier des informations prises en compte par ladite unité 2 d'acquisition et de traitement d'informations, et en particulier les échelles desdites graduations E1 et E2.

Selon l'invention :
- l'échelle de l'axe d'abscisse 9 dépend de (de préférence est proportionnelle à) l'échelle des graduations E1 et E2 ; et
- l'échelle de l'axe d'ordonnée 8 dépend de (de préférence est proportionnelle à) l'échelle des graduations E1 et E2, jusqu'à une valeur d'échelle prédéfinie, et est constante au-delà de cette valeur d'échelle prédéfinie.

Par ailleurs, le principe de visualisation conforme à l'invention de la trajectoire de l'aéronef, en fonction des modes de navigation et de guidage est présenté ci-après.

On notera qu'au sol, on visualise le plan de vol sur les présentations d'informations IF1 et IF2 par un tracé en vert continu, ainsi que les informations associées le long du plan de vol.

### I - Lorsque le pilote automatique est allumé

### A. Au décollage

❖ si le système SRS ("Speed Reference System) [ci-après SRS] est engagé :
   - si le système RWY ("Runway") [ci-après RWY] est engagé [le signal LOC ("Localizer") est suivi] jusqu'à 30 pieds :
      ◆ si le mode de navigation NAV est armé [ci-après NAV] (NAV s'engage à 30 pieds) :
         ➢ si le mode CLB ("climb") [ci-après CLB] est armé :
            ■ sur la fenêtre 6B, on visualise le plan de vol latéral actif, par exemple par un tracé en vert continu,
            ■ sur la fenêtre 6A, on visualise le plan de vol vertical actif, par exemple par un tracé en vert continu, le vecteur vitesse et les contraintes associées,
            ■ terrain = profil le long du plan de vol latéral,
            ■ altitude de sécurité = profil de MORA le long du plan de vol latéral,
         ➢ si CLB non armé :
            ■ sur la fenêtre 6B, on visualise le plan de vol latéral actif, par exemple par un tracé (vert) continu,
            ■ sur la fenêtre 6A, on visualise le plan de vol vertical par un tracé avec tirets (vert) et la trajectoire verticale sélectée par un tracé continu (vert),
            ■ terrain = profil le long du plan de vol latéral,
            ■ altitude de sécurité = MORA,
      ◆ si NAV non armé (pas de plan de vol) : RWY TRK ["Track (Angle)"] s'engage à 30 pieds :
         ■ sur la fenêtre 6B, on visualise la "ligne de vol" ("track line") par un tracé continu (vert),
         ■ sur la fenêtre 6A, on visualise la trajectoire verticale sélectée par un tracé (vert) continu,
         ■ terrain = profil le long du plan de vol latéral,
         ■ altitude de sécurité = MORA
   - si RWY non engagé (pas de LOC à suivre)
      ◆ pas de différence avec RWY engagé,
si SRS non engagé [pas de V2 ("Take Off Safety Speed") ou de mauvaise configuration de décollage] :
   - si NAV armé puis engagé, voir plus haut,
   - si NAV non armé, voir plus haut.

### B. Après le décollage : si le calculateur de gestion de vol FMS ("Flight Management System") [ci-après FMS] gère ou "manage" latéralement la trajectoire (mode NAV)

❖ si le FMS gère verticalement la trajectoire (mode CLIMB) :
   - sur la fenêtre 6B, on visualise le plan de vol latéral actif par un tracé (vert) continu,
   - sur la fenêtre 6A, on visualise le plan de vol vertical actif par un tracé (vert) continu, et le vecteur vitesse,
   - terrain = profil le long du plan de vol latéral,
   - altitude de sécurité = MORA,
❖ si le FMS ne gère pas verticalement la trajectoire (mode dit "OPEN CLIMB") :
   - sur la fenêtre 6B, on visualise le plan de vol latéral actif par un tracé (vert) continu,
   - sur la fenêtre 6A, on visualise le plan de vol vertical par un tracé avec tirets (vert) (non actif) et la trajectoire verticale sélectée par un tracé (vert) continu,
   - terrain = profil le long du plan de vol latéral,
   - altitude de sécurité = MORA.

### C. Après le décollage : si la navigation latérale se fait en mode sélecté

❖ sur la fenêtre 6B, on visualise le plan de vol par un tracé (vert) avec tirets et la ligne de vol ("track line") par un tracé (vert) continu,
❖ sur la fenêtre 6A, on visualise la trajectoire verticale sélectée par un tracé (vert) continu,
❖ terrain = profil le long de la ligne de vol ("track line") instantanée,
❖ altitude de sécurité = MORA.

### D. A l'approche à partir de NAV

❖ si approche avec un ILS ("Instrument Landing System") [ci-après ILS] :
   - même visualisation que NAV (plan de vol par un tracé continu sur la fenêtre 6B),
❖ si pas approche ILS :
   - même visualisation que NAV [plan de vol par un tracé (vert) continu sur la fenêtre 6B].

### E. A l'approche à partir de HDG/TRK ("Heading" / "Track")

❖ si approche ILS :
   - visualisation = NAV,
❖ si pas approche ILS :
   - visualisation = ligne de vol ("track line").

### F. A la remise de gaz : TOGA ("Take Off / Go Around") en phase de descente

Visualisation de la trajectoire de remise de gaz : par exemple en bleu à partir de la sélection du mode approche APPR ("Approach") :
fenêtre 6A : s'il est possible de la dérouler, on représente la trajectoire de remise de gaz dans la continuité de l'approche,
sinon : le point de décision est matérialisé en bleu avec un symbole représentant une flèche en tirets (bleue) dirigée vers le haut,

Visualisation pendant la transition en mode GA TRK ("Go Around" "Track") :
fenêtre 6B : on visualise le plan de vol qui devient un tracé avec tirets (vert) et la ligne de vol ("track line"),

Après engagement de NAV : voir plus haut
Plan de vol : tracé (vert) continu

Après engagement de HDG : voir plus haut.

### II - Lorsque le pilote automatique est éteint et le dispositif DV (Directeur de Vol) est allumé

### A. Si le mode FMS (NAV, LOC) reste engagé et affiché sur le FMA ("Flight Mode Annunciator")

❖ si le FMS gère verticalement la trajectoire (mode DES, CLB, ... reste affiché) :
   - sur la fenêtre 6B, on visualise le plan de vol latéral actif par un tracé (vert) continu,
   - sur la fenêtre 6A, on visualise :
      ◆ si une condition prédéfinie est vérifiée (si "Cross Track Error" < "tbd NM"), le plan de vol vertical actif par un tracé (vert) continu et le vecteur vitesse,
      ◆ sinon [si "Cross Track Error" > "tbd NM" (l'équipage s'éloigne du plan de vol en pilotant au manche)], le vecteur vitesse et l'environnement local,
❖ si le FMS ne gère pas la trajectoire verticale - dans ce cas, les ordres de l'unité FCU ("Flight Control Unit") sont retransmis au DV :
   - sur la fenêtre 6B, on visualise le plan de vol latéral actif par un tracé (vert) continu,
   - sur la fenêtre 6A, on visualise :
      ◆ si une condition prédéfinie est vérifiée [si "Cross Track Error < tbd NM"), le plan de vol vertical actif par un tracé (vert) avec tirets et la trajectoire verticale sélectée par un tracé (vert) continu, sans prendre en compte l'altitude sélectée,
      ◆ sinon (si "Cross Track Error > tbd NM"), le vecteur vitesse et l'environnement local.

### B. Si la navigation latérale se fait en mode sélecté (HDG/TRK) - dans ce cas, les ordres FCU ("Flight Control Unit") sont retransmis au DV

❖ sur la fenêtre 6B, on visualise le plan de vol par un tracé (vert) avec tirets et la ligne de vol ("track line") par un tracé (vert) continu,
❖ sur la fenêtre 6A, on visualise la trajectoire verticale sélectée par un tracé (vert) continu, sans prendre en compte l'altitude sélectée.

### III - Lorsque le pilote automatique est éteint et le dispositif DV est éteint le mode NAV saute :

■ sur la fenêtre 6B, on visualise le plan de vol latéral par un tracé (vert) avec tirets et la ligne de vol ("track line") par un tracé (vert) continu,
■ sur la fenêtre 6A, on visualise la trajectoire verticale sélectée par un tracé (vert) continu, sans prendre en compte l'altitude sélectée.

## Revendications

1. Procédé d'assistance au pilotage d'un aéronef, selon lequel on présente sur au moins un écran de visualisation (5) dudit aéronef, une première présentation d'informations (IF1) qui représente au moins un plan vertical le long d'une trajectoire de vol théorique dudit aéronef et qui comporte :
- un système d'axes (8, 9), dont un axe d'ordonnée (8) est gradué en altitude, et un axe d'abscisse (9) est gradué en distance à partir de la position de l'aéronef ;
- un symbole particulier (7) représentant l'aéronef, qui est disposé sur ledit axe d'ordonnée (8) à une position représentative de l'altitude dudit aéronef ;
- un premier tracé (T1) représentant une trajectoire de vol théorique dudit aéronef dans ledit plan vertical ; et
- un troisième tracé (T3) correspondant à un contour du terrain (10) dans ledit plan vertical,
**caractérisé en ce que** ladite première présentation d'informations (IF1) comporte de plus au moins un deuxième tracé (T2) correspondant à une altitude de sécurité.

2. Procédé selon la revendication 1,
**caractérisé en ce que** les valeurs d'altitude de sécurité utilisées pour réaliser ledit deuxième tracé (T2) sont issues d'au moins deux sources d'informations différentes (S1, S2), et on utilise les valeurs de l'une ou de l'autre desdites sources d'informations (S1, S2), en fonction de la phase de vol de l'aéronef et de la trajectoire suivie.

3. Procédé selon la revendication 2,
**caractérisé en ce que**, lorsque l'aéronef se trouve hors d'une route prédéfinie, on utilise les valeurs d'altitude de sécurité issues d'une source d'informations définissant des altitudes de sécurité sectorielle sur des secteurs quadrangulaires pour toutes les phases de vol, excepté pour la phase d'approche, pour laquelle on utilise les valeurs d'altitude de sécurité issues d'une source d'informations définissant des altitudes de sécurité sectorielle sur des secteurs circulaires.

4. Procédé selon l'une des revendications 2 et 3,
**caractérisé en ce que**, lorsque l'aéronef se trouve sur une route prédéfinie, on utilise les valeurs d'altitude de sécurité issues d'une source d'informations définissant les altitudes de sécurité de route.

5. Procédé selon l'une quelconque des revendications précédentes,
**caractérisé en ce que** ladite première présentation d'informations (IF1) comporte de plus un quatrième tracé correspondant à une coupe verticale d'une image météo issue d'un radar.

6. Procédé selon l'une quelconque des revendications précédentes,
**caractérisé en ce que**, si ledit deuxième tracé (T2) sort de ladite première présentation d'informations (IF1) en raison de l'échelle choisie pour l'axe des ordonnées, on indique sur ladite première présentation d'informations (IF1) la valeur numérique (V1, V2) de l'altitude de sécurité.

7. Procédé selon l'une quelconque des revendications précédentes,
**caractérisé en ce qu'**un premier symbole d'alerte (14) est présenté sur ladite première présentation d'informations (IF1) lorsque la trajectoire théorique (T1) de l'aéronef, par rapport audit deuxième tracé (T2), n'est pas conforme à des prescriptions prédéfinies.

8. Procédé selon l'une quelconque des revendications précédentes,
**caractérisé en ce qu'**un second symbole d'alerte est présenté sur ladite première présentation d'informations lorsque la trajectoire théorique (T1) de l'aéronef, par rapport audit troisième tracé (T3), n'est pas conforme à des prescriptions prédéfinies.

9. Procédé selon l'une quelconque des revendications précédentes,
**caractérisé en ce que** l'on représente le terrain (10), sur ladite première présentation d'informations (IF1), par une suite de rectangles adjacents (11) permettant de former ledit troisième tracé (T3).

10. Procédé selon l'une quelconque des revendications précédentes,
**caractérisé en ce que** ledit écran de visualisation (5) comporte au moins deux fenêtres de visualisation (6A, 6B), dont une première fenêtre (6A) comprend ladite première présentation d'informations (IF1) et une seconde fenêtre (6B) comprend une seconde présentation d'informations (IF2) qui comporte un tracé (17) représentant une trajectoire de vol théorique de l'aéronef dans un plan horizontal.

11. Procédé selon la revendication 10,
**caractérisé en ce que** l'échelle de l'axe d'abscisse (9) et, pour au moins certaines valeurs d'échelle, l'échelle de l'axe d'ordonnée (8) de ladite première présentation d'informations (IF1), dépendent de l'échelle de ladite seconde présentation d'informations (IF2).

12. Dispositif d'assistance au pilotage d'un aéronef, ledit dispositif comportant au moins :
- une pluralité de sources d'informations (S1 à Sn);
- une unité d'acquisition et de traitement d'informations (2) qui est reliée auxdites sources d'informations (S1 à Sn) ; et
- des moyens d'affichage (3) reliés à ladite unité d'acquisition et de traitement d'informations (2) et présentant, sur au moins un écran de visualisation (5), une première présentation d'informations (IF1) qui représente au moins un plan vertical le long d'une trajectoire de vol théorique dudit aéronef et qui comporte :
• un système d'axes (8, 9), dont un axe d'ordonnée (8) est gradué en altitude, et un axe d'abscisse (9) est gradué en distance à partir de la position de l'aéronef ;
• un symbole particulier (7) représentant l'aéronef, qui est disposé sur ledit axe d'ordonnée (8) à une position représentative de l'altitude dudit aéronef ;
• un premier tracé (T1) représentant une trajectoire de vol théorique dudit aéronef dans ledit plan vertical ; et
• un troisième tracé (T3) correspondant à un contour du terrain (10) dans ledit plan vertical,
**caractérisé en ce que** lesdits moyens d'affichage (3) sont formés de manière à présenter, de plus, sur ledit écran de visualisation (5), au niveau de ladite première présentation d'informations (IF1), au moins un deuxième tracé (T2) correspondant à une altitude de sécurité.

13. Dispositif selon la revendication 12,
**caractérisé en ce qu'**il comporte, de plus, des moyens (19) susceptibles d'être actionnés par un opérateur et permettant à ce dernier de modifier des informations prises en compte par l'unité d'acquisition et de traitement d'informations (2).

14. Dispositif selon l'une des revendications 12 et 13,
**caractérisé en ce que** ledit écran de visualisation (5) comporte au moins deux fenêtres de visualisation (6A, 6B), dont une première fenêtre (6A) comprend ladite première présentation d'informations (IF1) et une seconde fenêtre (6B) comprend une seconde présentation d'informations (IF2) qui comporte un tracé (17) représentant une trajectoire de vol théorique de l'aéronef dans un plan horizontal.

## Claims

1. A method for assistance with the piloting of an aircraft, according to which a first information presentation (IF1) which represents at least one vertical plane along a theoretical flight trajectory of said aircraft is presented on at least one visual-display screen (5) of said aircraft, and which includes:
- an axis system (8, 9), in which a y-axis (8) is graduated in altitude, and an x-axis (9) is graduated in distance from the position of the aircraft;
- a particular symbol (7) representing the aircraft, which is arranged on said y-axis (8) at a position representative of the altitude of said aircraft;
- a first plot (T1) representing a theoretical flight trajectory of said aircraft in said vertical plane; and
- a third plot (T3) corresponding to a contour of the terrain (10) in said vertical plane,
wherein said first information presentation (IF1) further includes at least one second plot (T2) corresponding to a safety altitude.

2. The method as claimed in claim 1, wherein the safety-altitude values used to form said second plot (T2) originate from at least two different information sources (S1, S2), and the values from one or from the other of said information sources (S1, S2) are used, depending on the phase of flight of the aircraft and of the trajectory followed.

3. The method as claimed in claim 2, wherein, when the aircraft finds itself outside a predefined route, the safety-altitude values used originate from an information source defining sector-based safety altitudes over quadrangular sectors for all the phases of flight, except for the approach phase, for which the safety-altitude values used are those originating from an information source defining sector-based safety altitudes over circular sectors.

4. The method as claimed in one of claims 2 and 3, wherein, when the aircraft finds itself on a predefined route, the safety-altitude values used are those originating from an information source defining the route safety altitudes.

5. The method as claimed in any one of the precedent claims, wherein said first information presentation (IF1) further includes a fourth plot corresponding to a vertical section of a weather image originating from a radar.

6. The method as claimed in any one of the precedent claims, wherein, if said second plot (T2) goes outside said first information presentation (IF1) by reason of the scale chosen for the y-axis, the numerical value (V1, V2) of the safety altitude is indicated on said first information presentation (IF1).

7. The method as claimed in any one of the precedent claims, wherein a first warning symbol (14) is presented on said first information presentation (IF1) when the theoretical trajectory (T1) of the aircraft, with respect to said second plot (T2), is not in accordance with predefined stipulations.

8. The method as claimed in any one of the precedent claims, wherein a second warning symbol is presented on said first information presentation when the theoretical trajectory (T1) of the aircraft, with respect to said third plot (T3), is not in accordance with predefined stipulations.

9. The method as claimed in any one of the precedent claims, wherein the terrain (10) is represented, on said first information presentation (IF1), by a series of adjacent rectangles (11) making it possible to form said third plot (T3).

10. The method as claimed in any one of the precedent claims, wherein said visual-display screen (5) includes at least two visual-display windows (6A, 6B), of which a first window (6A) comprises said first information presentation (IF1) and a second window (6B) comprises a second information presentation (IF2) which includes a plot (17) representing a theoretical flight trajectory of the aircraft in a horizontal plane.

11. The method as claimed in claim 10, wherein the scale of the x-axis (9) and, for at least some scale values, the scale of the y-axis (8) of said first information presentation (IF1) depend on the scale of said second information presentation (IF2).

12. A device for assistance with the piloting of an aircraft, said device including at least:
- a plurality of information sources (S1 to Sn);
- an information acquisition and processing unit (2), which is linked to said information sources (S1 to Sn) ; and
- display means (3) linked to said information acquisition and processing unit (2) and presenting, on at least one visual-display screen (5), a first information presentation (IF1) which represents at least one vertical plane along a theoretical flight trajectory of said aircraft and which includes:
• an axis system (8, 9), in which a y-axis (8) is graduated in altitude, and an x-axis (9) is graduated in distance from the position of the aircraft;
• a particular symbol (7) representing the aircraft, which is arranged on said y-axis (8) at a position representative of the altitude of said aircraft;
• a first plot (T1) representing a theoretical flight trajectory of said aircraft in said vertical plane, and
• a third plot (T3) corresponding to a contour of the terrain (10) in said vertical plane,
wherein said display means (3) are formed in such a way as to present, moreover, on said visual-display screen (5), at the level of said first information presentation (IF1), at least one second plot (T2) corresponding to a safety altitude.

13. The device as claimed in claim 12, which further includes means (19) capable of being actuated by an operator and allowing the latter to amend information taken into account by the information acquisition and processing unit (2).

14. The device as claimed in one of claims 12 and 13, wherein said visual-display screen (5) includes at least two visual-display windows (6A, 6B), of which a first window (6A) comprises said first information presentation (IF1) and a second window (6B) comprises a second information presentation (IF2) which includes a plot (17) representing a theoretical flight trajectory of the aircraft in a horizontal plane.

## Patentansprüche

1. Verfahren zur Unterstützung bei der Steuerung eines Luftfahrzeugs, wobei auf mindestens einem Visualisierungsbildschirm (5) des Luftfahrzeugs eine erste Informationsdarstellung (IF1) gezeigt wird, die mindestens eine senkrechte Ebene entlang einer theoretischen Flugbahn des Luftfahrzeugs darstellt und die folgendes umfasst:
- ein Achsensystem (8, 9), dessen Ordinatenachse (8) für die Höhe eingeteilt ist und dessen Abszissenachse (9) für die Entfernung von der Position des Luftfahrzeugs aus eingeteilt ist;
- ein bestimmtes Symbol (7), welches das Luftfahrzeug darstellt, das auf der Ordinatenachse (8) in einer Position angeordnet wird, die für die Höhe des Luftfahrzeugs repräsentativ ist;
- eine erste Linie (T1), die eine theoretische Flugbahn des Luftfahrzeugs in der senkrechten Ebene darstellt; und
- eine dritte Linie (T3), die einem Bodenprofil (10) in der senkrechten Ebene entspricht,
**dadurch gekennzeichnet, dass** die erste Informationsdarstellung (IF1) zudem mindestens eine zweite Linie (T2) umfasst, die einer Sicherheitshöhe entspricht.

2. Verfahren nach Anspruch 1, **dadurch gekennzeichnet, dass** die Sicherheitshöhenwerte, die verwendet werden, um die zweite Linie (T2) zu erstellen, aus mindestens zwei verschiedenen Informationsquellen (S1, S2) stammen, und dass je nach Flugphase des Luftfahrzeugs und der verfolgten Bahn die Werte der einen oder anderen der Informationsquellen (S1, S2) verwendet werden.

3. Verfahren nach Anspruch 2, **dadurch gekennzeichnet, dass** wenn das Luftfahrzeug sich außerhalb einer vordefinierten Strecke befindet, die Sicherheitshöhenwerte verwendet werden, die aus einer Informationsquelle stammen, welche die Sektorsicherheitshöhen über viereckige Sektoren für alle Flugphasen definiert, mit Ausnahme der Anflugphase, für welche die Sicherheitshöhenwerte verwendet werden, die aus einer Informationsquelle stammen, welche die Sektorsicherheitshöhen über kreisförmige Sektoren definiert.

4. Verfahren nach einem der Ansprüche 2 und 3, **dadurch gekennzeichnet, dass**, wenn das Luftfahrzeug sich auf einer vordefinierten Strecke befindet, die Sicherheitshöhenwerte verwendet werden, die aus einer Informationsquelle stammen, welche die Streckensicherheitshöhen definiert.

5. Verfahren nach einem der vorhergehenden Ansprüche, **dadurch gekennzeichnet, dass** die erste Informationsdarstellung (IF1) zudem eine vierte Linie umfasst, die einem senkrechten Schnitt eines Wetterbildes aus einem Radar entspricht.

6. Verfahren nach einem der vorhergehenden Ansprüche, **dadurch gekennzeichnet, dass** wenn die zweite Linie (T2) die erste Informationsdarstellung (IF1) wegen der für die Ordinatenachse gewählten Einteilung verlässt, in der ersten Informationsdarstellung (IF1) der Zahlenwert (V1, V2) der Sicherheitshöhe angegeben wird.

7. Verfahren nach einem der vorhergehenden Ansprüche, **dadurch gekennzeichnet, dass** ein erstes Warnsymbol (14) in der ersten Informationsdarstellung (IF1) gezeigt wird, wenn die theoretische Bahn (T1) des Luftfahrzeugs im Verhältnis zur zweiten Linie (T2) nicht den vordefinierten Bestimmungen entspricht.

8. Verfahren nach einem der vorhergehenden Ansprüche, **dadurch gekennzeichnet, dass** ein zweites Warnsymbol in der ersten Informationsdarstellung gezeigt wird, wenn die theoretische Bahn (T1) des Luftfahrzeugs im Verhältnis zu der dritten Linie (T3) nicht den vordefinierten Bestimmungen entspricht.

9. Verfahren nach einem der vorhergehenden Ansprüche, **dadurch gekennzeichnet, dass** der Boden (10) in der ersten Informationsdarstellung (IF1) durch eine Reihe von nebeneinanderliegenden Rechtecken (11) dargestellt wird, die es ermöglichen, die dritte Linie (T3) zu bilden.

10. Verfahren nach einem der vorhergehenden Ansprüche, **dadurch gekennzeichnet, dass** der Visualisierungsbildschirm (5) mindestens zwei Visualisierungsfenster (6A, 6B) umfasst, von denen ein erstes Fenster (6A) die erste Informationsdarstellung (IF1) und ein zweites Fenster (6B) eine zweite Informationsdarstellung (IF2) umfasst, die eine Linie (17) umfasst, die eine theoretische Flugbahn des Luftfahrzeugs in einer waagerechten Ebene darstellt.

11. Verfahren nach Anspruch 10, **dadurch gekennzeichnet, dass** die Einteilung der Abszissenachse (9) und zumindest für bestimmte Einteilungswerte die Einteilung der Ordinatenachse (8) der ersten Informationsdarstellung (IF1) von der Einteilung der zweiten Informationsdarstellung (IF2) abhängig sind.

12. Vorrichtung zur Unterstützung bei der Steuerung eines Luftfahrzeugs, wobei die Vorrichtung mindestens folgendes umfasst:
- eine Vielzahl von Informationsquellen (S1 bis Sn);
- eine Einheit zum Erfassen und Verarbeiten von Informationen (2), die an die Informationsquellen (S1 bis Sn) angeschlossen ist; und
- Anzeigemittel (3), die an die Einheit zum Erfassen und Verarbeiten von Informationen (2) angeschlossen sind und auf mindestens einem Visualisierungsbildschirm (5) eine erste Informationsdarstellung (IF1) zeigen, die mindestens eine senkrechte Ebene entlang einer theoretischen Flugbahn des Luftfahrzeugs darstellt und die folgendes umfasst:
- ein Achsensystem (8, 9), dessen Ordinatenachse (8) für die Höhe eingeteilt ist und dessen Abszissenachse (9) für die Entfernung von der Position des Luftfahrzeugs aus eingeteilt ist;
- ein bestimmtes Symbol (7), welches das Luftfahrzeug darstellt, das auf der Ordinatenachse (8) in einer Position angeordnet wird, die für die Höhe des Luftfahrzeugs repräsentativ ist;
- eine erste Linie (T1), die eine theoretische Flugbahn des Luftfahrzeugs in der senkrechten Ebene darstellt; und
- eine dritte Linie (T3), die einem Bodenprofil (10) in der senkrechten Ebene entspricht;
**dadurch gekennzeichnet, dass** die Anzeigemittel (3) derart gebildet sind, dass sie zudem auf dem Visualisierungsbildschirm (5), an der ersten Informationsdarstellung (IF1) mindestens eine zweite Linie (T2) zeigen, die einer Sicherheitshöhe entspricht.

13. Vorrichtung nach Anspruch 12, **dadurch gekennzeichnet, dass** sie zudem Mittel (19) umfasst, die von einer Bedienperson betätigt werden können und es dieser erlauben, Informationen zu ändern, die von der Einheit zum Erfassen und Verarbeiten von Informationen (2) berücksichtigt werden.

14. Vorrichtung nach einem der Ansprüche 12 und 13, **dadurch gekennzeichnet, dass** der Visualisierungsbildschirm (5) mindestens zwei Visualisierungsfenster (6A, 6B) umfasst, von denen ein erstes Fenster (6A) die erste Informationsdarstellung (IF1) und ein zweites Fenster (6B) eine zweite Informationsdarstellung (IF2) umfasst, die eine Linie (17) umfasst, die eine theoretische Flugbahn des Luftfahrzeugs in einer waagerechten Ebene darstellt.
